Europäisches Patentamt

European Patent Office

Office européen des brevets

(19)

(11) **EP 1 271 122 A2**

(12) **EUROPEAN PATENT APPLICATION**

(43) Date of publication:
**02.01.2003 Bulletin 2003/01**

(51) Int Cl.⁷: **G01M 3/20**, G01M 3/16

(21) Application number: **02013479.7**

(22) Date of filing: **14.06.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **26.06.2001 JP 2001193771**

(71) Applicant: **Sumitomo Chemical Company,
Limited
Chuo-ku Osaka 541-8550 (JP)**

(72) Inventors:
• **Mori, Yasuhiko**
  **Niihama-shi, Ehime (JP)**
• **Ota, Kiyoshi**
  **Niihama-shi, Ehime (JP)**
• **Miyata, Eisaburo**
  **Niihama-shi, Ehime (JP)**

(74) Representative: **VOSSIUS & PARTNER
Siebertstrasse 4
81675 München (DE)**

(54) **Method for detecting abnormality in process for exchanging heat**

(57)     The present invention provides a method for detecting abnormality in a process for exchanging heat between a heating medium and a process fluid comprising the step of: detecting a gaseous component at a gas phase in a flow path of the heating medium, wherein the gaseous component is generated by contact of the heating medium with the process fluid. This method can promptly detect a leakage of the process fluid in a process for exchanging heat between a heating medium and a process fluid.

**Fig.1**

EP 1 271 122 A2

## Description

The present invention relates to a method for detecting abnormality in a process for exchanging heat between a heating medium and a process fluid.

In processes of exchanging heat in general, a fused salt, water or the like is used as a heating medium to adjust a temperature of a process fluid to a predetermined level by exchanging heat between the heating medium and the process fluid. For example, the fused salt, which is a mixture of sodium nitrite ($NaNO_2$), sodium nitrate ($NaNO_3$) potassium nitrate ($KNO_3$) and the like, is characterized by (1) excellent heat transfer properties, (2) remarkable chemical stability under high temperatures, (3) easy temperature control, and the like. Therefore, the fused salt is used as a heating medium for heating or cooling various process fluids in high temperatures.

The process fluid can sometimes leak from a pipe and the like into the heating medium side of a heat exchanger during heat exchanging due to erosion of the pipe and the like. Therefore, various methods have been studied to detect the leakage of process fluid. For example, there has been proposed a method of detecting the heat of the reaction, which is generated by the reaction between a leaked process fluid and a heating medium, by measuring temperatures. However, the method has risks of secondary disasters such as the leakage of the heating medium, the process fluid and the like outside and explosion by the time when the abnormality is detected since it takes a considerably long period of time for the temperature to be raised to a degree which triggers the detection of abnormality after the leakage of process fluid.

An object of the present invention is to provide a method for detecting abnormality in a process for exchanging heat between a heating medium and a process fluid, which can promptly detect a leakage of the process fluid.

Namely, the present invention provides a method for detecting abnormality in a process for exchanging heat between a heating medium and a process fluid comprising the step of detecting a gaseous component at a gas phase in a flow path of the heating medium, wherein the gaseous component is generated by contact of the heating medium with the process fluid. It is possible to promptly detect a leakage of the process fluid by this method.

For example, in the case where the heating medium is a fused salt containing $NaNO_2$, the leakage of the process fluid is promptly detected by detecting nitrogen oxide gas and combustible gases which are generated by the reaction between the heating medium and the process fluid. In addition, examples of the nitrogen oxide gas include NO gas, $NO_2$ gas, $N_2O$ gas and the like. Examples of the combustible gases include dimethyl sulfide, carbon disulfide, methane, hydrogen sulfide and the like which change with the process fluid used.

The flow path of the heating medium in the present invention is not particularly limited so far as the heating medium flows through it. Examples of equipments constituting the flow path include a heat exchanger, a pipe, a tank, a pump, a filter and the like, which are a heat exchanger and associated equipments thereof. The gas phase in a flow path of the heating medium in the present invention is a gas part which is formed in the above equipment, and vent lines thereof are included too in it.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

The present invention will become more fully understood from the detailed description given herein below and accompanying drawings which are given by way of illustration only, and thus are not limitative of the present invention and wherein;

Fig. 1 is a schematic diagram showing an embodiment of a method for detecting abnormality in a process for exchanging heat according to the present invention,

Fig. 2 is a schematic diagram showing a testing apparatus, which was used in Reference Example 1 of the present invention,

Fig. 3 is a graph showing results of a calorimetry using an isoperibolic calorimeter in Reference Example 1 of the present invention,

Fig. 4 is a graph showing another results of calorimetry using an isoperibolic calorimeter in Reference Example 1 of the present invention,

Fig. 5 is a schematic diagram showing a testing apparatus which was used in Reference Example 2 of the present invention, and

Fig. 6 is a schematic diagram showing a testing apparatus, which was used in Reference Example 3 of the present invention.

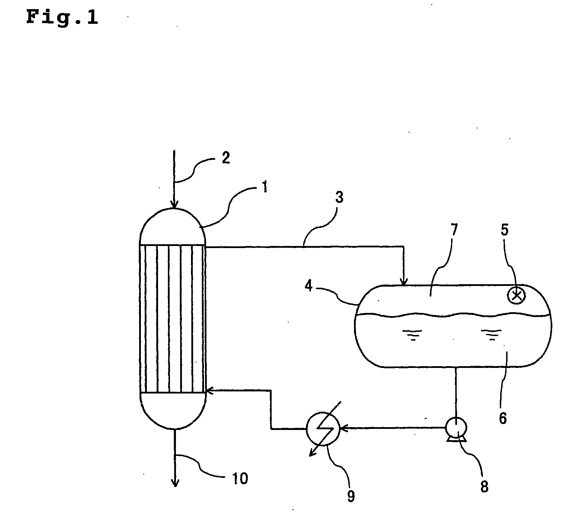

The present invention will be described in detail below with reference to the accompanying drawings. Fig. 1 is a schematic diagram showing an embodiment of a method for detecting abnormality in a process for exchanging heat according to the present invention.

As shown in Fig. 1, in the case where a process fluid leaks into a heating medium side of a heat exchanger (reactor) 1 and then a gaseous component generated by contact of the heating medium with the leaked process fluid are sent to a heating medium tank 4 through a pipe 3, a method of the present invention detecting the abnormality enables a detection of the leakage of the process fluid by a gas detector 5 which is provided in a gas phase 7 of the heating medium tank to detect at least one of the gaseous components.

The heat exchanger 1 is not particularly limited so far as it exchanges heat between the process fluid and the heating medium through a partition such as a pipe or a plate, for example, a shell and tube type heat exchanger, a plate type heat exchanger, a spiral type heat exchanger, a block type heat exchanger and the like, which are a partition type heat exchanger, may be used.

The heat exchanger includes a heat exchanger only exchanging heat and a reactor exchanging heat together with a reaction such as a shell and tube type reactor in which a catalyst is packed.

As the heating medium, a fused salt, water and the like may be used as described above. As the fused salt, a composition containing at least $NaNO_2$ in the range of about 20 to about 90 wt% and having a melting point of about 100 to about 200°C may preferably used. In the case of using a composition comprising $NaNO_2$, $NaNO_3$ and $KNO_3$ as the fused salt, the composition may preferably comprise about 20 to about 50 wt% of $NaNO_2$, about 5 to about 15 wt% of $NaNO_3$ and about 45 to about 65 wt% of $KNO_3$. In the case of using a composition comprising $NaNO_2$ and $KNO_3$ as the fused salt, the composition may preferably comprise about 20 to about 90 wt% of $NaNO_2$ and about 80 to about 10 wt% of $KNO_3$. Concrete examples of the compositions include a composition (melting point 142°C) comprising about 40 wt% of $NaNO_2$, about 7 wt% of $NaNO_3$ and about 53 wt% of $KNO_3$, a composition (melting point 152°C) comprising about 34 wt% of $NaNO_2$, about 13 wt% of $NaNO_3$ and about 53 wt% of $KNO_3$, a composition (melting point 139°C) comprising about 50 wt% of $NaNO_2$ and about 50 wt% of $KNO_3$, and the like. In addition, water may be added to the fused salts to lower solidifying points thereof and facilitate temperature controls thereof.

The process fluid is not particularly limited so far as the gaseous component generated by contact of the heating medium with the process fluid are detected at the gas phase 7 in the flow path of the heating medium when the process fluid flows into the flow path of the heating medium.

When the heating medium is the fused salt as described above, process fluids include (a) a process fluid containing acidic substances such as HCl, $Cl_2$, $H_2SO_4$ and the like, (b) a process fluid containing $H_2S$ gas, (c) a process fluid containing methyl mercaptane gas, and the like. When these process fluids contact with the fused salt, nitrogen oxide gas generates in the case of (a), gases such as nitrogen oxide, $CO_2$ and the like generate in the case of (b) and gases such as dimethyl disulfide, nitrogen oxide, $CS_2$, $CH_4$, $H_2S$ and the like generate in the case of (c).

Hereafter, a case will be described in detail, wherein the heating medium is the fused salt containing $NaNO_2$ and the process fluid is the process fluid (a) which contains HCl, $Cl_2$, $O_2$ and the like which are used in a process of oxidizing HCl to produce $Cl_2$.

The process fluid is introduced into the reactor (heat exchanger) 1 through a pipe 2 to be heat-exchanged with the fused salt in the course of the reaction in the reactor (heat exchanger) 1 and then sent to the succeeding process through a pipe 10.

The fused salt, which temperature is raised due to the heat exchange with the process fluid, is sent to a heating medium tank 4 through a pipe 3. A predetermined amount of the fused salt is stored in this heating medium tank 4 which is formed of a liquid phase 6 (fused salt) and a gas phase 7. The fused salt of the liquid phase 6 is fed to a cooler 9 by a pump 8 to be cooled and then fed to the heat exchanger 1 again.

If a crack or the like occurs on the tube in the heat exchanger 1 due to a pressure or erosion and the process fluid containing HCl, $Cl_2$ and the like leaks into the flow path of the fused salt containing $NaNO_2$ in the above process for exchanging heat, then reactions represented by the following chemical equations will occur.

(Chemical Equation 1)

$$NaNO_2 + HCl \rightarrow NaCl + 1/2H_2O + 1/2NO + 1/2NO_2$$

$$+ 19.3kj/mol$$

(Chemical Equation 2)

$$NaNO_2 + HCl + 1/8O_2 \rightarrow NaCl + 1/2H_2O + NO_2$$

$$+ 47.85 \ kj/mol$$

(Chemical Equation 3)

$$NaNO_2 + 1/2Cl_2 \rightarrow NaCl + NO_2 + 19.25 \text{ kj/mol}$$

As indicated by the above chemical Equations 1 to 3, all the reactions are exothermic reactions. Changes in number of moles numbers before and after the reaction respectively are from 1 mol to 1.5 mol (Chemical Equation 1), from 1.125 mol to 1.5 mol (Chemical Equation 2) and from 0.5 mol to 1 mol (Chemical Equation 3) and, therefore, the reactions are dangerous since such increases cause the inner pressure rises in the heat exchanger 1, the pipes, the heating medium tank 4 and the like.

If the above reactions occur, a concentration of nitrogen oxide gas is increased in the gas phase 7 described above, and the gas detector 5, which is provided in the gas phase 7, promptly detects the leakage of the process fluid. By the detection, an interlock operates to stop supplies of the process fluid and the fused salt to the heat exchanger 1, thereby obviate expansion of damage.

A controlled potential electrolysis type NOx detector or an infrared ray type NOx detector may be used as the detector 5, and concrete examples thereof include a controlled potential type NOx meter manufactured by New Cosmos Co., Ltd.

The method for detecting abnormality in a process for exchanging heat of the present invention is not limited to the above embodiment so far as the gaseous component generated by contact of the heating medium with the process fluid can be detected at the gas phase in the flow path of the heating medium if the heating medium and the process fluid are mixed. Specifically, as another embodiment, concrete examples may be a process wherein NOx gas is generated, in a process for exchanging heat in the course of obtaining acrolein by oxidation of propylene, as a result of a heat decomposition of $NaNO_2$ due to heat of reaction generated by contact of acrolein in a process fluid with a fused salt.

In addition, when the process fluid of above described (c) contains methyl mercaptan gas, combustible gases such as dimethyl disulfide, carbon disulfide, methane, hydrogen sulfide and the like generate by contact of these process fluid with the fused salt containing $NaNO_2$, therefore, abnormality can be detected by detecting these combustible gases.

EXAMPLES

Hereafter, the method for detecting abnormality of the present invention will be described by way of examples, however, the invention is not limited to the examples.

Reference Example 1

Reference Example 1 was conducted under an assumption that the process fluid containing HCl and $Cl_2$ leaked to be mixed with the fused salt containing $NaNO_2$, which is described in the above embodiment, and then nitrogen oxide gas and heat generated were evaluated.

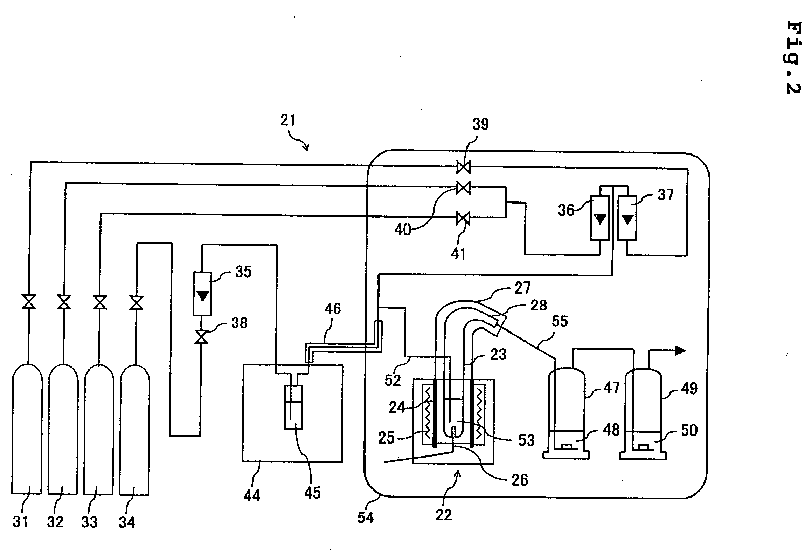

Fig. 2 is a schematic diagram showing the whole scheme of a testing apparatus.

As shown in Fig. 2, an isoperibolic calorimeter 22 ( RADEX-SOLO manufactured by ASI Co. Ltd.), for estimating the risk of the mixing of the fused salt containing $NaNO_2$ and the gas containing HCl and $Cl_2$, and absorption bottles 47 and 49 absorbing generated gases were provided in a draft 54. In this example, the isoperibolic calorimeter was used with modifying one of the above commercially-available isoperibolic calorimeter in such a manner that a sample supply pipe 52 and a gas collection pipe 28 are added to a sample container 23 in order to supply the gas containing HCl and $Cl_2$ continuously as well as to collect the generated gas.

The isoperibolic calorimeter 22 has a structure in such a manner that the gas is continuously supplied from the sample supply pipe 52 to the sample container 23 which holds the fused salt, and the gas generated by the mixing is discharged from the gas collection pipe 28 which is covered with a ribbon heater 27. It is possible to heat the sample container 23 through a jacket 24 using a heater 25 and, therefore, the heat and the gas which are generated by the mixing of the supply gas and the fused salt 53 described above can be evaluated under any heating rate or isoperibolic condition. The temperature of the fused salt 53 is measured with a temperature sensor 26.

The gases supplied from a nitrogen cylinder 31, a hydrogen chloride cylinder 32, a chlorine cylinder 33 and an oxygen cylinder 34 are adjusted to be predetermined ratios by means of valves 38, 39, 40 and 41 and flow meters 35, 36 and 37 so that the supply gas is supplied through the sample supply pipe 52 to the sample container 23. Oxygen, which is supplied from the oxygen cylinder 34, is passed through pure water 45 which is heated in a thermostat 44 and then incubated by a ribbon heater 46 to be supplied to the sample container 23 together with water vapor.

The presence of the heat generated by the mixing of the supply gas and the fused salt 53 was examined using the above-described test apparatus, and, at the same time, the generated gas was collected as being absorbed by water 48 and a 10% sodium hydroxide aqueous solution 50 in the absorption bottles 47 and 49. Composition analyses of collection solutions obtained were conducted by ion chromatography. Generation of nitrogen oxide can be confirmed by coloring (browning) in a glass pipe 55 between the gas collection pipe 28 and the absorption bottle 47 as well as in gas phases in the absorption bottles 47 and 49. A rough amount of nitrogen oxide was confirmed by a darkness of the coloring in the glass pipe 55 and the gas phases of absorption bottles 47 and 49.

Tests were conducted under the heating condition (Test 1) and the isoperibolic condition (Test 2), and composition ratios of the gases supplied to the sample container 23 were as shown in Table 1.

Table 1

| Test | Temperature condition | Composition and charging amount of fused salt | | Charging amounts of components of gas supplied to sample container (cc/min) | |
|---|---|---|---|---|---|
| Test 1 | Heating condition 0.5 (°C/min.) | $NaNO_2$ | 40 wt% | <Composition 1> | |
| | | $NaNO_3$ | 7 wt% | Oxygen | 10.0 |
| | | $KNO_3$ : | 53 wt% | Water vapor | 0.6 |
| | | | | Chlorine | 0.9 |
| | | Charging amount 6.81(g) | | Hydrogen chloride | 18.9 |
| | | | | Total feed rate | 30.4 |
| Test 2 | Isoperibolic condition 300 (°C) | $NaNO_2$ | 40 wt% | <Composition 2> | |
| | | $NaNO_3$ | 7 wt% | Oxygen | 4.2 |
| | | $KNO_3$ | 53 wt% | Water vapor | 7.1 |
| | | | | Chlorine | 7.3 |
| | | Charging amount 6.30(g) | | Hydrogen chloride | 1.4 |
| | | | | Total feed rate | 20.0 |
| | | | | <Composition 3> | |
| | | | | Oxygen | 6.5 |
| | | | | Water vapor | 0.4 |
| | | | | Chlorine | 0.5 |
| | | | | Hydrogen chloride | 12.6 |
| | | | | Total feed rate | 20.0 |

<Test 1>

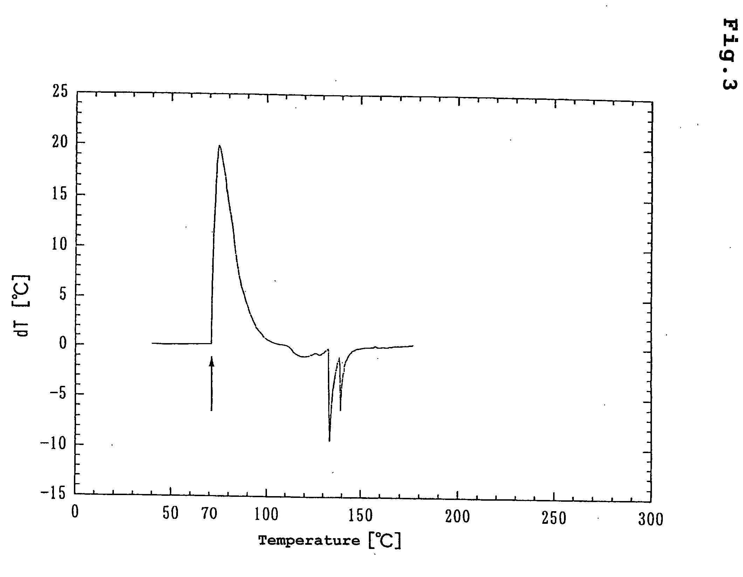

As shown in Table 1, Test 1 was conducted using the gas of Composition 1 as the supply gas to the sample container 23 under the heating condition of 0.5°C/min. At the initial stage of Test 1, only nitrogen gas was supplied to the sample container 23, and then the supply of nitrogen gas was terminated when a temperature of the fused salt 53 had reached to about 70°C to start supply of the gas of Composition 1. The result of Test 1 is shown in Fig. 3.

As shown in Fig. 3, heat was generated immediately after the start of the supply of the mixed gas (the start point is indicated with an arrow) and, at the same time, a large amount of NOx gas was generated.

<Test 2>

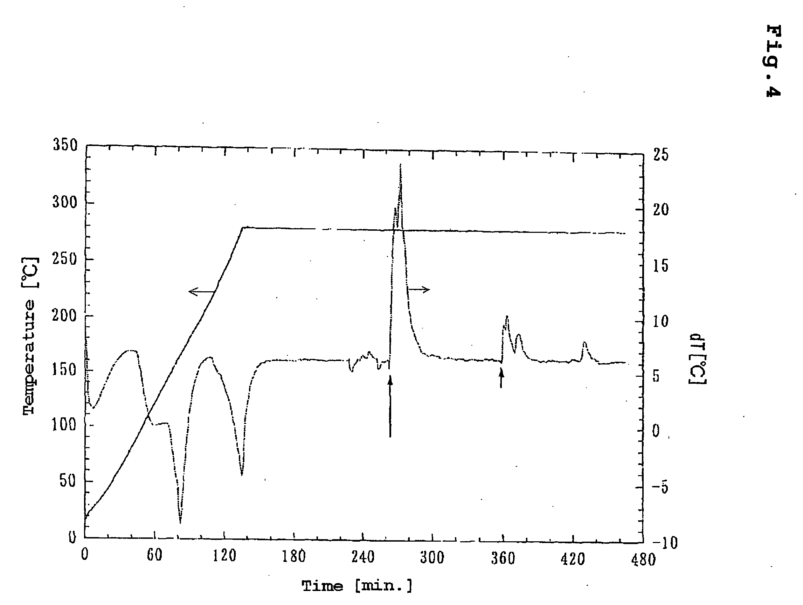

As shown in Table 1, Test 2 was conducted using the gas of Composition 2 as the supply gas to the sample container 23 under the isoperibolic condition (heater temperature: 280°C), followed by using the gas of Composition 3 under the same isoperibolic condition. The result of Test 2 is shown in Fig. 4.

As shown in Fig. 4, heat was generated immediately after the start of the supply of the gas of Composition 2 (the start point is indicated with an arrow) and, at the same time, a large amount of NOx gas was generated. Then, after changing the supply gas to the gas of Composition 3 (the changed point is indicated with an arrow), heat was generated in the same manner and, at the same time, a large amount of NOx gas was generated.

From the results of Tests 1 and 2, it was observed that each of the gases of Compositions 1, 2 and 3 generates NOx gas immediately after the mixing with the fused salt. The generation of NOx gas was confirmed when the sample temperature is about 70°C in Test 1 (heating condition) and about 280°C in Test 2 (isoperibolic condition). The temperatures were lower than that of the heat exchange process (about 300 to 350°C) of producing $Cl_2$ by the oxidization of HCl, for example. In an actual process for exchanging heat (e.g., the above-mentioned process such as the $Cl_2$ producing process), it is difficult to detect a slight leakage by temperature changes which are caused by the mixing of the leaked process fluid and the fused salt; however, it is possible to detect the leakage of the process fluid promptly at an early stage by detecting the generated NOx gas.

Reference Example 2

Reference Example 2 was conducted under an assumption that the process fluid containing $H_2S$ leaked to be mixed with the fused salt containing $NaNO_2$, and gases, which were generated by the mixing, were evaluated.

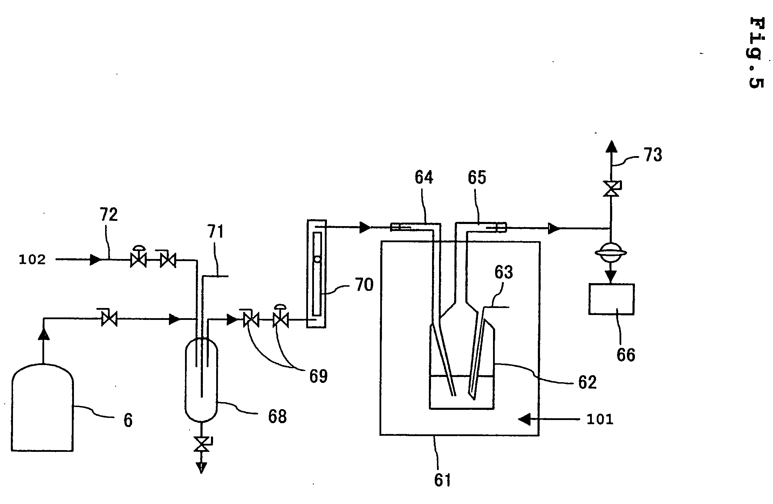

Fig. 5 is a schematic diagram showing the whole scheme of the testing apparatus.

As shown in Fig. 5, a glass sample container 62 for estimating a risk of the mixing of the fused salt containing $NaNO_2$ and the $H_2S$ gas, a thermocouple 63 for measuring temperature changes caused by heat generated at the time of the mixing, a supply pipe 64 for supplying the $H_2S$ gas to the sample container 62, are provided in a thermostat 61. The sample container 62 has a collection pipe 65 for collecting the gas generated by the mixing. The generated gas is collected through the collection pipe 65 into a so-called Tedler bag 66 (sampling bag made of the polyvinylfluoride film Tedler® manufactured by du Pont de Nemours and Company).

The H2S gas is supplied from a $H_2S$ cylinder 67. Between the $H_2S$ cylinder 67 and the supply pipe 64, there are disposed a container 68 for draining, a valve 69 for adjusting a gas feed rate and a gas flow meter 70. In the container 68 for draining, a thermocouple 71 for measuring temperature of the $H_2S$ gas is provided.

Using the above-described testing apparatus, tests were conducted according to the following procedure.

(1) The fused salt ($NaNO_2$: 40 wt%, $NaNO_3$: 7 wt%, $KNO_3$: 53 wt%) was pulverized and charged into the sample container 62.
(2) The sample container 62 was placed inside the thermostat 61 to be heated to a predetermined temperature.
(3) Nitrogen gas 101 for purging was supplied to the thermostat 61 to achieve a nitrogen gas atmosphere within the thermostat 61.
(4) After the temperature of the fused salt had reached a predetermined temperature, a substitution by nitrogen gas 102 was performed in a line (from a pipe 72 to a pipe 73) through which the gas passes.
(5) The $H_2S$ gas was supplied to the sample container 62 at a predetermined feed rate.
(6) Gases generated by the $H_2S$ gas supply were collected into the Tedler bag 66 for a predetermined period of time.

Results of the tests are shown in Table 2.

Table 2

| | Test 3 | Test 4 | Test 5 | Test 6 |
|---|---|---|---|---|
| Charging amount of fused salt | 6g | 9.1g | 16g | 0 |
| Temperature of thermostat | 400°C | 410°C | 400°C | |
| $H_2S$ gas feed rate | 20~30 cm$^3$/min | 20~30 cm$^3$/min | 20~30 cm$^3$/min | |
| Method of analysis of collected gas | Gas chromatography | Gas chromatography | Detection tube and combustible gas detector | Gas chromatography |

Table 2   (continued)

|  | Test 3 | Test 4 | Test 5 | Test 6 |
|---|---|---|---|---|
| Results of analysis of collected gas | $N_2O$<br><br>$CO_2$<br><br>$H_2O$ | $N_2O$<br><br>$CO_2$<br><br>$H_2O$ | $NO_2$ 330ppm<br><br>NO 170ppm<br><br>$SO_2$ 50ppm<br><br>Combustible gas 0.7% | $H_2S$ |
| Remarks | A large amount of $N_2O$ gas was generated. Heat was generated by the mixing. | A large amount of $N_2O$ gas was generated. Heat was generated by the mixing. | The concentration of $H_2S$ gas was below the detection limit (0.1 ppm or less). Heat was generated by the mixing. |  |

As shown in Table 2, only the $H_2S$ gas was detected in Test 6 (wherein the fused salt was not used) which was conducted as a comparative example. In turn, the gases such as $N_2O$, $CO_2$, $H_2O$, NO2, NO, $SO_2$ and the like were detected in Tests 3 to 5. Especially, from the fact that large amounts of the nitrogen oxide gases ($N_2O$ gas, $NO_2$ gas and NO gas) were generated, it was found that the nitrogen oxide gases would be effectively used as subjects for the detection of leakage in the process using the fused salt containing $NaNO_2$ and the process fluid containing $H_2S$.

Reference Example 3

Reference Example 3 was conducted under an assumption that the process fluid containing methyl mercaptane gas leaked to be mixed with the fused salt containing $NaNO_2$, and gases, which were generated by the mixing, were evaluated.

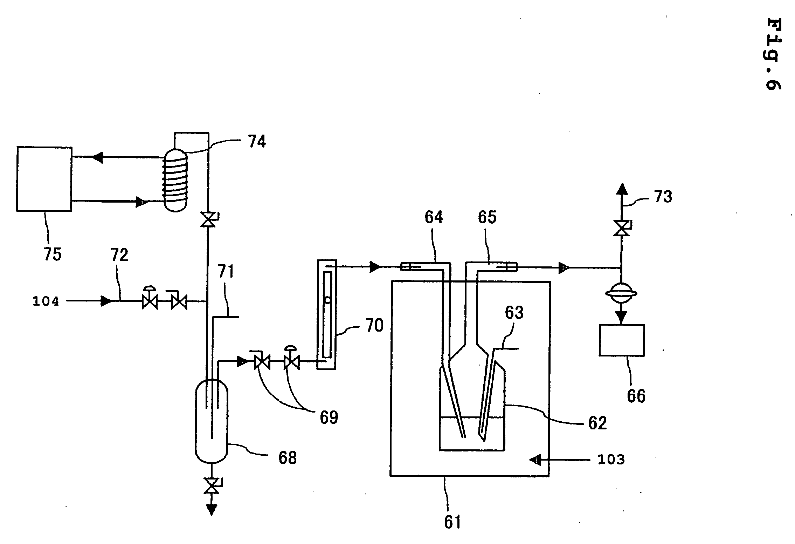

Fig. 6 is a schematic diagram showing the whole scheme of the testing apparatus.

As shown in Fig. 6, a glass sample container 62 for estimating a risk of the mixing of the fused salt containing $NaNO_2$ and the methylmercaptane gas, a thermocouple 63 for measuring temperature changes caused by heat generated by the mixing, a supply pipe 64 for supplying the methylmercaptane gas to the sample container 62, are provided in a thermostat 61. The sample container 62 has a collection pipe 65 for collecting the gases generated by the mixing. The generated gases were collected through the collection pipe 65 into a Tedler bag 66.

The above methyl mercaptane gas was generated by heating a methyl mercaptane solution in a container 74 by a silicon oil which temperature was adjusted by a thermostatic circulation bath 75. Between the container 74 and the supply pipe 64, there were disposed a container 68 for draining, a valve 69 for adjusting a gas feed rate and a gas flow meter 70. In the container 68 for draining, a thermocouple 71 for measuring temperature of the methyl mercaptane gas was provided.

Using the above-described testing apparatus, the tests were conducted by the following procedure.

(1) The fused salt ($NaNO_2$: 40 wt%, $NaNO_3$: 7 wt%, $KNO_3$: 53 wt%) was pulverized and charged into the sample container 62.
(2) The sample container 62 was placed inside the thermostat 61 to be heated to a predetermined temperature.
(3) Nitrogen gas 103 for purging was supplied to the thermostat 61 to achieve a nitrogen gas atmosphere inside the thermostat 61.
(4) After the temperature of the fused salt had reached a predetermined temperature, a substitution by nitrogen gas 104 was performed in a line (from a pipe 72 to a pipe 73) through which the methyl mercaptane gas passes.
(5) The methyl mercaptane gas was supplied to the sample container 62 at a predetermined feed rate.
(6) Gases generated by the methyl mercaptane supply were collected into the Tedler bag 66 for a predetermined period of time.

Results of the tests are shown in Table 3.

Table 3

| | Test 7 | Test 8 | Test 9 |
|---|---|---|---|
| Charging amount of fused salt | 6g | 10g | 0 |
| Temperature of thermostat | 420°C | 420°C | |
| Methylmercaptane gas feed rate | 20~100 cm$^3$/min | 20~100 cm$^3$/min | |
| Method of analysis of collected gas | Gas chromatography | Gas chromatography, detection tube and combustible gas detector | Gas chromatography |
| Results of analysis of collected gas | Dimethyl disulfide, $CO_2$, $N_2O$, $CS_2$, dimethyl sulfide, $CH_4$, $H_2S$, ethylene, carbonyl sulfide, dimethyl trisulfide, $SO_2$, ethane, $H_2O$, propylene, isobutene, 1,2-propadiene, methanol, acetonitrile. | The same gases as that of Test 7 were detected by gas chromatography. 10 ppm of $NO_2$ was detected by the analysis using the detection tube. 7% of a combustible gas was detected by the analysis using the combustible gas detector. | Dimethyl disulfide, $CO_2$, $H_2S$, $H_2O$, methanol, $CS_2$. |
| Remarks | A large amount of $N_2O$ gas was generated. Heat was generated by the mixing. | The concentration of NO gas was below the detection limit of the detection tube (5 ppm or less). Heat was generated by the mixing. | |

As shown in Table 3, in Test 9 which was conducted as a comparative example (wherein the fused salt was not used), only dimethyl disulfide, $CO_2$, $H_2S$, $H_2O$, methanol, $CS_2$ were detected. In turn, gases such as dimethyl disulfide, $CO_2$, $N_2O$, $CS_2$, dimethyl sulfide, $CH_4$, $H_2S$, ethylene, carbonyl sulfide, dimethyl trisulfide, $SO_2$, ethane, $H_2O$, propylene, isobutene, 1,2-propadiene, methanol, acetonitrile and $NO_2$ were detected in Tests 7 and 8. Especially, in view of the easiness of detection and amounts of the generated gases, it was found that dimethyl disulfide, nitrogen oxide ($NO_2$, $N_2O$), $CS_2$, $CH_4$ and $H_2S$, would be effectively used as subjects for the detection of leakage in the process using the fused salt containing $NaNO_2$ and the process fluid containing methyl mercaptane.

Example 1

A removal of heat generated in a reactor was conducted in the same manner as a method shown in Fig.1.
An oxidation reaction of hydrogen chloride was conducted by feeding 150 kg/h of HCl gas and 44 kg/h of 02 gas to a shell and tube type reactor 1 packed with a ruthenium type catalyst. A heating medium comprising 50 wt% of $NaNO_2$ and 50 wt% of $NaNO_3$ and having a temperature of 340°C was hold in a heating medium tank 4. A controlled potential electrolysis type NOx meter manufactured by New Cosmos Co., Ltd. was provided at a gas phase 7 of the heating medium tank 4. After a necessary amount of a heating medium for removal of the heat of the reaction was supplied to a cooler 9 by a circulation pump 8 and cooled to 250°C, the removal of the heat of the reaction was conducted by supplying the cooled heating medium to a shell side of the reactor 1. A temperature of a process gas in the reactor 1 was 350°C and a temperature of a heating medium discharged from the shell of the reactor was 340°C. A process gas comprising 23 kg/h of HCl, 124 kg/h of $Cl_2$, 16 kg/h of $O_2$ and 31 kg/h of $H_2O$ was discharged from the reactor.
In this process for exchanging heat, when a process fluid leaks to a shell side of the reactor, NOx gas generates by the reaction of $NaNO_2$ with HCl and/or $Cl_2$, and an abnormality in this heat exchange process can be promptly detected by detecting this NOx gas with a NOx detector 5.
According to the method for detecting abnormality in a process for exchanging heat between a heating medium and a process fluid of the present invention, a leakage of the process fluid can be promptly detected by detecting a gaseous component generated by contact of the heating medium with the process fluid.

The invention being thus described, it will be obvious that the same may be varied in many ways. Such variations are not to be regarded as a departure from the sprit and scope of the invention, and such modifications as would be obvious to one skilled in the art are intended to be included within the scope of the following claims.

**Claims**

1. A method for detecting abnormality in a process for exchanging heat between a heating medium and a process fluid comprising the step of:

   detecting a gaseous component at a gas phase in a flow path of the heating medium, wherein the gaseous component is generated by contact of the heating medium with the process fluid.

2. The method for detecting abnormality in a process for exchanging heat according to claim 1, wherein the heating medium is a fused salt containing sodium nitrite, the process fluid contains at least one compound selected from the group consisting of chlorine, hydrogen chloride, hydrogen sulfide and methyl mercaptan, and the gaseous component generated is nitrogen oxide or a combustible gas.

3. The method for detecting abnormality in a process for exchanging heat according to claim 2, wherein the fused salt contains about 20 to about 90 wt% of sodium nitrite and has a melting point of about 100 to about 200°C.

4. The method for detecting abnormality in a process for exchanging heat according to claim 1, wherein the gaseous component generated is nitrogen oxide and is detected by a controlled potential electrolysis type NOx detector.

5. A device for detecting abnormality in a process for exchanging heat between a heating medium and a process fluid comprising:

   a heat exchanger;
   a heating medium tank;
   a pump and pipes for circulating the heating medium between the heat exchanger and the heating medium tank;
   a gas detector provided at a gas phase in a flow path of the heating medium for detecting a gaseous component generated by contact of the heating medium with the process fluid leaked into the flow path of the heating medium.

6. The device for detecting abnormality in a process for exchanging heat according to claim 5, wherein the heating medium is a fused salt containing sodium nitrite, the process fluid contains at least one compound selected from the group consisting of chlorine, hydrogen chloride, hydrogen sulfide and methyl mercaptan, and the gaseous component generated is nitrogen oxide or combustible gas.

7. The device for detecting abnormality in a process for exchanging heat according to claim 6, wherein the fused salt contains about 20 to about 90 wt% of sodium nitrite and has a melting point of about 100 to about 200°C.

8. The device for detecting abnormality in a process for exchanging heat according to claim 5, wherein the gaseous component generated is nitrogen oxide and is detected by a controlled potential electrolysis type NOx detector.

**Fig.1**

**Fig.2**

Fig.3

Fig.4

Fig.5

Fig.6